# EUROPEAN PATENT APPLICATION

(11) **EP 4 836 059 A1**
(43) Date of publication of application: **04.11.2026**
(21) Application number: 25855534.1
(22) Date of filing: 18.02.2025
(51) Int. Cl.: H01M 10/0568, H01M 4/62

(54) **BATTERY CELL, BATTERY APPARATUS, AND ELECTRIC DEVICE**

(30) Priority: 22.08.2024 CN 202411161598
(71) Applicant: Contemporary Amperex Technology Co., Limited, Ningde, Fujian 352100 (CN)
(72) Inventor: LIU, Huanji, Ningde, Fujian 352100 (CN); SUN, Xin, Ningde, Fujian 352100 (CN); JING, Erdong, Ningde, Fujian 352100 (CN); HE, Yong, Ningde, Fujian 352100 (CN); CHEN, Xiao, Ningde, Fujian 352100 (CN); SHI, Wei, Ningde, Fujian 352100 (CN)
(74) Representative: Aera A/S
(86) International application number: PCT/CN2025/077896
(87) International publication number: WO 2026/040354

(57) **Abstract**

Provided are a battery cell, a battery apparatus, and an electric device. The battery cell comprises: a positive electrode sheet, the positive electrode sheet comprising a positive electrode film layer, and the positive electrode film layer comprising a lithium iron phosphate material and a lithium supplementing agent; a negative electrode sheet, the negative electrode sheet comprising a negative electrode film layer, the negative electrode film layer comprising a negative electrode active material, and the negative electrode active material comprising graphite; a separator, the separator being located between the positive electrode sheet and the negative electrode sheet; and an electrolyte, the electrolyte comprising a lithium salt, the lithium salt comprising an organic lithium salt and an inorganic lithium salt, the organic lithium salt comprising at least one of lithium bis(fluorosulfonyl)imide, lithium difluoro(oxalato)borate, and lithium difluoro(oxalato)phosphate, the inorganic lithium salt comprising at least one of lithium hexafluorophosphate, lithium tetrafluoroborate, and lithium fluorosulfonate, and the mass ratio of the inorganic lithium salt to the organic lithium salt being (6-2):1. Therefore, battery cells having long service life and high power can be obtained.

## Description

### TECHNICAL FIELD

The present application relates to the field of batteries, and specifically, to a battery cell, a battery apparatus, and an electric device.

### BACKGROUND

Batteries are not only applied to energy storage power systems such as hydropower, thermal power, wind power, and solar power stations, but also widely applied to electric transportation vehicles such as electric bicycles, electric motorcycles, or electric cars, as well as in military equipment, aerospace, and other fields. Batteries in the related art cannot simultaneously satisfy the requirements of long life and high power.

### SUMMARY

A first aspect of the present application provides a battery cell. The battery cell includes: a positive electrode sheet including a positive electrode film layer, the positive electrode film layer including a lithium iron phosphate material and a lithium supplementing agent; a negative electrode sheet including a negative electrode film layer, the negative electrode film layer including a negative electrode active material, and the negative electrode active material including graphite; a separator located between the positive electrode sheet and the negative electrode sheet; and an electrolyte including a lithium salt, the lithium salt including an organic lithium salt and an inorganic lithium salt, the organic lithium salt including at least one of lithium bis(fluorosulfonyl)imide, lithium difluoro(oxalato)borate, and lithium difluoro(oxalato)phosphate, the inorganic lithium salt including at least one of lithium hexafluorophosphate, lithium tetrafluoroborate, and lithium fluorosulfonate, and a mass ratio of the inorganic lithium salt to the organic lithium salt being (6-2):1. Thus, in one aspect, while the cycle performance of the battery cell is improved, a solid electrolyte interphase film (CEI film) is formed on the surface of the lithium supplementing agent, which reduces the risk of oxidative decomposition of the electrolyte, thereby improving the cycle performance of the battery. In another aspect, the combination of the organic lithium salt and the inorganic lithium salt can form a solid electrolyte interphase film (SEI film) having low impedance and good toughness on the surface of the graphite, thereby improving the power performance of the battery cell.

According to some embodiments of the present application, the organic lithium salt includes at least one of lithium bis(fluorosulfonyl)imide and lithium bis(trifluoromethanesulfonyl)imide, and based on the total mass of the electrolyte, a mass percentage of the organic lithium salt is 1% to 4%.

According to some embodiments of the present application, the inorganic lithium salt includes lithium hexafluorophosphate, and based on the total mass of the electrolyte, a mass percentage of the inorganic lithium salt is 7.5% to 12%.

Thus, by means of keeping the contents of the organic lithium salt and the inorganic lithium salt within the above ranges, an SEI film having low impedance and good toughness is formed on the surface of the negative electrode, which increases the intercalation and deintercalation rates of lithium ions, and reduces the probability of SEI film damage caused by graphite expansion, thereby improving the cycle performance of the battery cell.

According to some embodiments of the present application, an OI value of the graphite is 2 to 5. Thus, by means of reducing the OI value of the graphite, the lithium intercalation and deintercalation rates are increased, thereby improving the kinetic performance of the battery cell.

According to some embodiments of the present application, a volume average particle size Dv50 of the graphite is 8 µm to 14 µm. Thus, by means of reducing the volume average particle size of the graphite, the lithium intercalation and deintercalation rates are increased, thereby improving the kinetic performance of the battery cell.

According to some embodiments of the present application, the graphite includes artificial graphite. Thus, artificial graphite has a small number of active sites, which improves the cycle life of the battery cell.

According to some embodiments of the present application, the lithium supplementing agent includes LiₓM_{y}O_{z}, where M includes at least one of Ni, Co, V, Cr, Mn, Fe, Mo, Cu, and Zn, 0 < x ≤ 5, 1 ≤ y ≤ 3, and 2 ≤ z ≤ 8.

According to some embodiments of the present application, the lithium supplementing agent includes at least one of Li₂NiO₂ and Li₅FeO₄.

According to some embodiments of the present application, the lithium supplementing agent includes at least one of LiₙNiOₘ and LiₑFeO_{f}, where 0 < m ≤ 2, 0 ≤ n ≤ 2, 0 ≤ e ≤ 5, and 0 < f ≤ 4.

According to some embodiments of the present application, the lithium supplementing agent includes at least one of NiOₘ and LiₚFeO_{q}, where 0 < m ≤ 2, 0 ≤ p ≤ 1, and 0 < q ≤ 2.

Thus, the decomposition of the lithium supplementing agent compensates for the active lithium ions consumed in forming the SEI film, thereby improving the initial Coulombic efficiency and energy density of the battery cell.

According to some embodiments of the present application, the electrolyte further includes a solvent. The solvent includes a cyclic carbonate and a linear carbonate. Thus, the dielectric constant of the electrolyte is increased, the viscosity of the electrolyte is reduced, and the migration rate of lithium ions is increased.

According to some embodiments of the present application, based on the total mass of the electrolyte, a mass percentage of the cyclic carbonate is 15% to 25%, and a mass percentage of the linear carbonate is 50% to 70%. Thus, the dielectric constant of the electrolyte is increased, the viscosity of the electrolyte is reduced, and the migration rate of lithium ions is increased.

According to some embodiments of the present application, the cyclic carbonate includes at least one of ethylene carbonate or propylene carbonate; and/or the linear carbonate includes at least one of dimethyl carbonate, ethyl methyl carbonate, or diethyl carbonate.

According to some embodiments of the present application, the linear carbonate includes dimethyl carbonate and ethyl methyl carbonate, and based on the total mass of the electrolyte, a mass percentage of the dimethyl carbonate is 30% to 40%, and a mass percentage of the ethyl methyl carbonate is 30% to 40%. Thus, the viscosity of the electrolyte is reduced.

According to some embodiments of the present application, the electrolyte further includes a linear carboxylate, and based on the total mass of the electrolyte, a mass percentage of the linear carboxylate is 5% to 15%. Thus, the conductivity of the electrolyte is increased, thereby improving the kinetic performance of the battery cell.

According to some embodiments of the present application, the linear carboxylate includes at least one of methyl formate, methyl acetate, ethyl formate, and ethyl acetate. Thus, the conductivity of the electrolyte is increased, thereby improving the kinetic performance of the battery cell.

According to some embodiments of the present application, the electrolyte further includes an additive. The additive includes at least one of a fluorine-containing additive or a phosphorus-containing additive. Thus, a stable CEI film is formed on the surface of the positive electrode, which reduces the risk of continuous gas generation caused by decomposition of the electrolyte under high voltage during the formation stage.

According to some embodiments of the present application, the additive includes a fluorine-containing additive and a phosphorus-containing additive, and based on the total mass of the electrolyte, a total mass percentage of the fluorine-containing additive and the phosphorus-containing additive is 0.05% to 1%. Thus, a stable CEI film is formed on the surface of the positive electrode, which reduces the risk of continuous gas generation caused by decomposition of the electrolyte under high voltage during the formation stage.

According to some embodiments of the present application, based on the total mass of the electrolyte, a mass percentage of the fluorine-containing additive is 0.05% to 0.5%, and a mass percentage of the phosphorus-containing additive is 0.05% to 0.5%. Thus, a stable CEI film is formed on the surface of the positive electrode, which reduces the risk of continuous gas generation caused by decomposition of the electrolyte under high voltage during the formation stage.

According to some embodiments of the present application, the fluorine-containing additive includes at least one of fluoroethylene carbonate, difluoroethylene carbonate, and perfluoroalkyl-substituted ethylene carbonate; and/or the phosphorus-containing additive includes at least one of tris(trimethylsilyl) phosphate, triphenylphosphine oxide, tris(2,2,2-trifluoroethyl) phosphite, trimethylolpropane, tris(2,2,2-trifluoroethyl) phosphate, and 2-trifluoroethoxy-2-oxo-1,3,2-dioxaphospholane. Thus, a stable CEI film is formed on the surface of the positive electrode, which reduces the risk of continuous gas generation caused by decomposition of the electrolyte under high voltage during the formation stage.

According to some embodiments of the present application, the additive further includes a carbonate-based additive. The carbonate-based additive includes at least one of vinylene carbonate, propylene carbonate, and vinyl ethylene carbonate. Thus, the content of the polymer in the SEI film is increased, which improves the stability of the SEI film, thereby improving the cycle life of the battery cell.

According to some embodiments of the present application, the carbonate-based additive includes vinylene carbonate, and based on the total mass of the electrolyte, a mass percentage of the vinylene carbonate is 0.5% to 3%. Thus, the SEI film containing the polymer is formed on the surface of the negative electrode, which improves the stability of the SEI film, thereby improving the service life of the battery cell.

According to some embodiments of the present application, at least a part of the surface of the lithium iron phosphate is provided with a first carbon coating layer, and based on the total mass of the lithium iron phosphate, a mass percentage of the first carbon coating layer is 0.5% to 1.5%; and/or at least a part of the surface of the lithium supplementing agent is provided with a second carbon coating layer, and based on the total mass of the lithium supplementing agent, a mass percentage of the second carbon coating layer is 1% to 5%. Therefore, carbon coating on at least a part of the surface of the lithium iron phosphate improves the electronic conductivity of the electrode sheet; and carbon coating on at least a part of the surface of the lithium supplementing agent reduces the number of exposed active sites of the lithium supplementing agent, thereby reducing the probability of reaction with the electrolyte.

According to some embodiments of the present application, based on the total mass of the positive electrode film layer, a mass percentage of the lithium supplementing agent is 0.5% to 5%. Thus, the lithium supplementing effect is improved, thereby improving the energy density of the battery cell.

According to some embodiments of the present application, a coating weight of the positive electrode film layer is 10 mg/cm² to 25 mg/cm².

According to some embodiments of the present application, a compaction density of the positive electrode film layer is 2.2 g/cm³ to 2.6 g/cm³.

Thus, by means of keeping the coating weight and compaction density of the positive electrode film layer within the above ranges, the energy density of the battery cell is improved.

According to some embodiments of the present application, a coating weight of the negative electrode film layer is 5 mg/cm² to 15 mg/cm².

According to some embodiments of the present application, a compaction density of the negative electrode film layer is 1.2 g/cm³ to 1.7 g/cm³.

Thus, by means of keeping the coating weight and compaction density of the negative electrode film layer within the above ranges, the energy density of the battery cell is improved.

According to some embodiments of the present application, the separator includes a base film, the base film being provided with a coating on at least one side. Thus, the risk of oxidation of the base film caused by high voltage during formation is reduced.

According to some embodiments of the present application, a thickness of the separator is 7 µm to 15 µm. Thus, the risk of oxidation of the base film caused by high voltage during formation is reduced.

According to some embodiments of the present application, an electrolyte injection coefficient of the battery cell is 3 g/Ah to 3.8 g/Ah. Thus, the content of the electrolyte in the battery cell is increased, thereby improving the kinetic performance of the battery cell.

A second aspect of the present application provides a battery apparatus, including the battery cell according to the first aspect of the present application. The battery apparatus is at least one of a battery module, a battery pack, and an energy storage apparatus.

A third aspect of the present application provides an electric device, including the battery cell according to the first aspect of the present application or the battery apparatus according to the second aspect of the present application. The battery cell or the battery apparatus is configured to provide electric energy.

Additional aspects and advantages of the present application will be given in the following description, and some will become apparent from the following description or will be learned from practices of the present application.

### BRIEF DESCRIPTION OF THE DRAWINGS

Various other advantages and benefits will become clear to a person of ordinary skill in the art by reading the detailed description of the following preferred embodiments. The accompanying drawings are only used for the purpose of illustrating the preferred embodiments, and shall not be construed as limiting the present application. In addition, in all the accompanying drawings, same components are denoted by same reference numerals. In the accompanying drawings:
FIG. 1 is a schematic view of a battery cell according to an embodiment of the present application;
FIG. 2 is an exploded view of the battery cell according to an embodiment of the present application shown in FIG. 1;
FIG. 3 is a schematic view of a battery module according to an embodiment of the present application;
FIG. 4 is a schematic view of a battery pack according to an embodiment of the present application;
FIG. 5 is an exploded view of the battery pack according to an embodiment of the present application shown in FIG. 4; and
FIG. 6 is a schematic view of an electric device using a battery apparatus as a power source according to an embodiment of the present application.

### Description of the reference numerals:

1: battery pack; 2: upper case body; 3: lower case body; 4: battery module; 5: battery cell; 51: housing; 52: electrode assembly; and 53: cover plate.

### DETAILED DESCRIPTION

Embodiments of the technical solutions of the present application are described in detail below. The following embodiments are only used to illustrate the technical solutions of the present application more clearly, and therefore serve only as examples and shall not be used to limit the scope of protection of the present application.

Reference herein to an "embodiment" means that a particular feature, structure, or characteristic described in conjunction with the embodiment is included in at least one embodiment of the present application. The appearances of the phrase at various positions in the specification do not necessarily refer to the same embodiment, nor to an independent or alternative embodiment mutually exclusive with other embodiments. It will be explicitly and implicitly understood by a person skilled in the art that the embodiments described herein are combined with other embodiments.

Unless otherwise specified, all the embodiments and optional embodiments of the present application are combined with one another to form new technical solutions.

Unless otherwise specified, all technical features and optional technical features of the present application are combined with one another to form new technical solutions.

Unless otherwise specified, all steps of the present application are performed sequentially or randomly, preferably sequentially. For example, the method includes steps (a) and (b), which indicates that the method includes steps (a) and (b) performed sequentially, or includes steps (b) and (a) performed sequentially. For example, the mentioned method further includes step (c), which indicates that step (c) is added to the method in any sequence. For example, the method includes steps (a), (b), and (c), or includes steps (a), (c), and (b), or includes steps (c), (a), and (b).

Currently, in view of market development trends, batteries are finding increasingly wide applications. Batteries have been applied to energy storage power systems such as hydropower, thermal power, wind power, and solar power stations. However, battery cells in the related technology cannot simultaneously satisfy the requirements of long life and high power.

The present application is intended to develop a battery cell having both long service life and high power. By means of arranging a lithium supplementing agent in the positive electrode film layer, the lithium consumption caused by the formation of an SEI film during the formation stage is compensated, thereby improving the cycle performance of the battery cell. However, the lithium supplementing agent tends to generate high-valent transition metal oxides in the battery cell, and such high-valent transition metal oxides pose a risk of oxidizing the electrolyte. In one aspect, the addition of a fluorine-containing organic lithium salt to the electrolyte promotes the formation of a dense CEI film on the surface of the high-valent transition metal oxides, thereby reducing the risk of oxidizing the electrolyte and improving the cycle performance of the battery cell. In another aspect, the compounding of organic and inorganic lithium salts optimizes the composition of an SEI film on the surface of graphite, forming an SEI film having low impedance and good toughness, which not only increases the intercalation and deintercalation rates of lithium ions in graphite, but also effectively mitigates the breakage of the SEI film caused by graphite expansion during charging, thereby improving the power performance of the battery cell.

The battery cell according to the present application is used in an electric device that uses the battery cell as a power source or in various energy storage systems that use the battery cell as an energy storage element. The electric devices include, but are not limited to, mobile phones, tablet computers, laptop computers, electric toys, electric tools, electric bicycles, electric vehicles, ships, spacecraft, etc. The electric toys include stationary or mobile electric toys, for example, game consoles, toy electric vehicles, toy electric ships, toy electric airplanes, etc. The spacecraft include airplanes, rockets, space shuttles, spaceships, etc.

A first aspect of the present application provides a battery cell. The battery cell includes: a positive electrode sheet including a positive electrode film layer, the positive electrode film layer including a lithium iron phosphate material and a lithium supplementing agent; a negative electrode sheet including a negative electrode film layer, the negative electrode film layer including a negative electrode active material, and the negative electrode active material including graphite; a separator located between the positive electrode sheet and the negative electrode sheet; and an electrolyte including a lithium salt, the lithium salt including an organic lithium salt and an inorganic lithium salt, the organic lithium salt including at least one of lithium bis(fluorosulfonyl)imide, lithium difluoro(oxalato)borate, and lithium difluoro(oxalato)phosphate, the inorganic lithium salt including at least one of lithium hexafluorophosphate, lithium tetrafluoroborate, and lithium fluorosulfonate, and a mass ratio of the inorganic lithium salt to the organic lithium salt being (6-2):1.

In the battery cell according to the present application, a lithium supplementing agent is arranged in the positive electrode film layer to improve the cycle performance of the battery cell. To reduce the risk that high-valent transition metal oxides generated by the lithium supplementing agent oxidize the electrolyte, an organic lithium salt is added to the electrolyte. The organic lithium salt promotes the formation of a dense CEI film on the surface of the high-valent transition metal oxides, thereby reducing direct contact between the transition metal oxides and the electrolyte, reducing the risk of oxidative decomposition of the electrolyte, and improving the cycle performance of the battery cell. The combination of the organic lithium salt and the inorganic lithium salt further enables the formation of an SEI film having low impedance and good toughness on the surface of the negative electrode, thereby improving the power performance of the battery cell. Specifically, when the lower limit of the mass ratio of the inorganic lithium salt to the organic lithium salt is less than 2:1, the organic lithium salt exists in an excessive amount, which poses a risk of corroding the positive electrode current collector and causing a significant increase in the internal resistance of the battery cell; and when the upper limit of the mass ratio of the inorganic lithium salt to the organic lithium salt is greater than 6:1, the organic lithium salt exists in a small amount, failing to form an SEI film having low impedance and good toughness, which is not conducive to the long service life and high power performance of the battery cell.

In the present application, a method for testing the contents of the organic lithium salt and the inorganic lithium salt is as follows: a certain amount of the electrolyte from the battery cell is weighed, made up to 100 mL with ultrapure water, and analyzed by ion chromatography with automatic sample injection. The test is performed with reference to the standard JY/T 020-1996 or GB/T 6040-2002.

As an example, a mass ratio of the inorganic lithium salt to the organic lithium salt is (6-2):1, for example, 6:1, 5:1, 4:1, 3.65:1, 3:1, 2:1, etc., or a range formed by any of the foregoing values.

According to some specific embodiments of the present application, a mass ratio of the inorganic lithium salt to the organic lithium salt is (4-3):1.

### [Positive electrode sheet]

The positive electrode sheet includes a positive electrode current collector and a positive electrode film layer located on at least one side of the positive electrode current collector along a thickness direction thereof, and the positive electrode film layer includes a lithium iron phosphate material and a lithium supplementing agent.

In some embodiments, a metal foil or a composite current collector is used as the positive electrode current collector. For example, as the metal foil, an aluminum foil is used. The composite current collector includes a polymer material base layer and a metal layer formed on at least one surface of the polymer material base layer. The composite current collector is formed by forming a metal material (aluminum, aluminum alloy, nickel, nickel alloy, titanium, titanium alloy, silver, silver alloy, etc.) on a polymer material substrate (such as a substrate of polypropylene (PP), polyethylene terephthalate (PET), polybutylene terephthalate (PBT), polystyrene (PS), and polyethylene (PE)).

According to some embodiments of the present application, the lithium supplementing agent includes LiₓM_{y}O_{z}, where M includes at least one of Ni, Co, V, Cr, Mn, Fe, Mo, Cu, and Zn, 0 < x ≤ 5, 1 ≤ y ≤ 3, and 2 ≤ z ≤ 8. Thus, the decomposition of the lithium supplementing agent compensates for the active lithium ions consumed in forming the SEI film, thereby improving the initial Coulombic efficiency and energy density of the battery cell.

As an example, x is 1, 2, 3, 4, 5, etc., or a range formed by any of the foregoing values.

As an example, y is 1, 1.5, 2, 2.5, 3, etc., or a range formed by any of the foregoing values.

As an example, z may be 2, 3, 4, 5, 6, 7, 8, etc., or a range formed by any of the foregoing values.

According to some embodiments of the present application, the lithium supplementing agent includes at least one of Li₂NiO₂ and Li₅FeO₄. Thus, the lithium supplementing effect is improved.

According to some embodiments of the present application, when all or part of the lithium in the lithium supplementing agent is deintercalated, the lithium supplementing agent includes at least one of LiₙNiOₘ and LiₑFeO_{f}, where 0 < m ≤ 2, 0 ≤ n ≤ 2, 0 ≤ e ≤ 5, and 0<f≤4.

As an example, m is 0.5, 1, 1.5, 2, etc., or a range formed by any of the foregoing values.

As an example, n is 0, 0.5, 1, 1.5, 2, etc., or a range formed by any of the foregoing values.

As an example, e is 0, 1, 2, 3, 4, 5, etc., or a range formed by any of the foregoing values.

As an example, f is 1, 2, 3, 4, etc., or a range formed by any of the foregoing values.

According to some embodiments of the present application, when all of the lithium in the lithium supplementing agent is deintercalated, the lithium supplementing agent includes at least one of NiOₘ and LiₚFeO_{q}, where 0 < m ≤ 2, 0 ≤ p ≤ 1, and 0 < q ≤ 2.

As an example, m is 0.5, 1, 1.5, 2, etc., or a range formed by any of the foregoing values.

As an example, p is 0, 0.2, 0.4, 0.6, 0.8, 1, etc., or a range formed by any of the foregoing values.

As an example, q is 0.5, 1, 1.5, 2, etc., or a range formed by any of the foregoing values.

In the present application, provided is a method for detecting a lithium supplementing agent: A battery cell is discharged to 2.0 V at 0.1 C and then disassembled, a positive electrode sheet is scraped to collect powder, and the powder is tested using an X-ray diffractometer (XRD), where at least one characteristic peak corresponding to the lithium supplementing agent exists in the spectrum.

According to some embodiments of the present application, at least a part of the surface of the lithium iron phosphate is provided with a first carbon coating layer. Based on the total mass of the lithium iron phosphate, a mass percentage of the first carbon coating layer is 0.5% to 1.5%, for example, 0.5%, 0.7%, 0.9%, 1.1%, 1.3% or 1.5%, or a range formed by any of the foregoing values. Thus, the electronic conduction between lithium iron phosphate particles is improved, thereby improving the electronic conductivity of the electrode sheet.

According to some embodiments of the present application, at least a part of the surface of the lithium supplementing agent is provided with a second carbon coating layer. Based on the total mass of the lithium supplementing agent, a mass percentage of the second carbon coating layer is 1% to 5%, for example, 1%, 2%, 3%, 4% or 5%, or a range formed by any of the foregoing values. Thus, the second carbon coating layer on the surface of the lithium supplementing agent accelerates the release of lithium ions from the lithium supplementing agent, so as to rapidly form pores in the electrode sheet, which allows the electrolyte to rapidly wet the electrode sheet, thereby increasing the lithium ion transport efficiency and improving the kinetic performance of the battery cell. According to some specific embodiments of the present application, based on a total mass of the lithium supplementing agent, a mass percentage of the second carbon coating layer is 1% to 5%. According to some specific embodiments of the present application, based on a total mass of the lithium supplementing agent, a mass percentage of the second carbon coating layer is 2% to 4%.

According to some embodiments of the present application, based on a total mass of the positive electrode film layer, a mass percentage of the lithium supplementing agent is 0.5% to 5%, for example, 0.5%, 1%, 2%, 3%, 4% or 5%, or a range formed by any of the foregoing values. Thus, the lithium supplementing effect is improved.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent includes at least one of superconducting carbon, acetylene black, carbon black, Ketjen black, a carbon dot, a carbon nanotube, graphene, and a carbon nanofiber. Further, optionally, superconducting carbon is used in combination with a carbon nanotube, thereby improving the electronic conductivity of the positive electrode sheet.

According to some embodiments of the present application, a coating weight of the positive electrode film layer may be 10 mg/cm² to 25 mg/cm², for example, 10 mg/cm², 12 mg/cm², 14 mg/cm², 16 mg/cm², 18.5 mg/cm², 20 mg/cm², 22 mg/cm², 24 mg/cm² or 25 mg/cm², or a range formed by any of the foregoing values. Thus, while the energy density of the battery cell is improved, the tortuosity of the positive electrode sheet is reduced and the diffusion rate of lithium ions is increased, thereby improving the kinetic performance of the battery cell. According to some specific embodiments of the present application, a coating weight of the positive electrode film layer is 15 mg/cm² to 20 mg/cm².

It should be noted that the coating weight of the positive electrode film layer herein refers to a coating weight of the positive electrode film layer on a single side of the positive electrode sheet.

According to some embodiments of the present application, a compaction density of the positive electrode film layer is 2.2 g/cm³ to 2.6 g/cm³, for example, 2.2 g/cm³, 2.3 g/cm³, 2.4 g/cm³, 2.5 g/cm³, 2.6 g/cm³, etc., or a range formed by any of the foregoing values. Thus, while the energy density of the battery cell is improved, the tortuosity of the positive electrode sheet is reduced and the diffusion rate of lithium ions is increased, thereby improving the kinetic performance of the battery cell. According to some specific embodiments of the present application, a compaction density of the positive electrode film layer is 2.3 g/cm³ to 2.5 g/cm³.

The present application provides a method for testing a coating weight of a positive electrode film layer: A battery cell is disassembled to obtain a positive electrode sheet. For example, a single-side coated positive electrode sheet (if the sheet is a double-side coated positive electrode sheet, the positive electrode film layer on one side is first wiped off) is taken and punched into a small disc with an area of S₁. The weight of the small disc is measured and recorded as M₁, and the thickness H₁ thereof is measured. Then, the positive electrode film layer of the weighted positive electrode sheet is wiped off. The weight of the positive current collector is measured and recorded as M₀, and the thickness H₀ thereof is measured. The single-side coating weight of the positive electrode film layer = (M₁ - M₀)/S₁, the thickness of the positive electrode film layer = H₁ - H₀, and the compaction density of the positive electrode film layer = the single-side coating weight of the positive electrode film layer/the thickness of the positive electrode film layer.

In some embodiments, the positive electrode sheet is prepared in the following manner: dispersing the above components for preparing the positive electrode sheet, for example, the lithium iron phosphate material, the lithium supplementing agent, the conductive agent, the binder, and any other components, in a solvent (for example, N-methylpyrrolidone) to form a positive electrode slurry; and coating the positive electrode current collector with the positive electrode slurry, followed by drying, cold pressing, and other processes, to obtain the positive electrode sheet.

### [Negative electrode sheet]

The negative electrode sheet includes a negative electrode current collector and a negative electrode film layer located on at least one side of the negative electrode current collector, the negative electrode film layer including a negative electrode active material, and the negative electrode active material including graphite.

In some embodiments, a metal foil or a composite current collector is used as the negative electrode current collector. For example, as the metal foil, a copper foil is used. The composite current collector includes a polymer material base layer and a metal layer formed on at least one surface of the polymer material substrate. The composite current collector is formed by forming a metal material (copper, copper alloy, nickel, nickel alloy, titanium, titanium alloy, silver, silver alloy, etc.) on a polymer material substrate (such as a substrate of polypropylene (PP), polyethylene terephthalate (PET), polybutylene terephthalate (PBT), polystyrene (PS), and polyethylene (PE)).

According to some embodiments of the present application, a coating weight of the negative electrode film layer may be 5 mg/cm² to 15 mg/cm², for example, 5 mg/cm², 7 mg/cm², 8.6 mg/cm², 9 mg/cm², 11 mg/cm², 13 mg/cm² or 15 mg/cm², or a range formed by any of the foregoing values. Thus, the energy density of the battery cell is improved. According to some specific embodiments of the present application, a coating weight of the negative electrode film layer is 7 mg/cm² to 11 mg/cm².

It should be noted that the coating weight of the negative electrode film layer herein refers to a coating weight of the negative electrode film layer on a single side of the negative electrode sheet.

According to some embodiments of the present application, a compaction density of the negative electrode film layer is 1.2 g/cm³ to 1.7 g/cm³, for example, 1.2 g/cm³, 1.32 g/cm³, 1.4 g/cm³, 1.5 g/cm³, 1.6 g/cm³, 1.7 g/cm³, etc., or a range formed by any of the foregoing values.

In the present application, a method for testing the coating weight of the negative electrode film layer is performed with reference to the method for testing the coating weight of the positive electrode film layer.

According to some embodiments of the present application, the compaction density of the negative electrode film layer is a compaction density of the negative electrode film layer in the negative electrode sheet corresponding to the battery cell at 100% SOC.

According to some embodiments of the present application, the compaction density of the negative electrode film layer is a compaction density of the negative electrode film layer in the negative electrode sheet corresponding to the battery cell at 0% SOC.

According to some embodiments of the present application, the negative electrode film layer includes graphite, and a volume average particle size Dv50 of the graphite is 8 µm to 14 µm. Thus, by means of reducing the volume average particle size of the graphite, the intercalation and deintercalation rates of lithium ions between graphite layers are increased, and the impedance of the battery cell is lowered, thereby improving the kinetic performance.

As an example, the volume average particle size Dv50 of the graphite is 8 µm, 10 µm, 12 µm, 14 µm, etc., or a range formed by any of the foregoing values.

In the present application, Dv50 refers to a particle size corresponding to a cumulative volume distribution percentage of 50%, for example, as determined by using a laser particle size analyzer (Malvern Master Size 2000) with reference to the standard GB/T 19077-2016/ISO 13320:2009.

According to some embodiments of the present application, the negative electrode film layer includes graphite, the graphite having a layered structure. The OI value is used to measure the ability of the graphite material to intercalate and deintercalate lithium ions, and the OI value of the graphite is 2 to 5. Therefore, by means of reducing the OI value of the graphite, the kinetic performance of the battery is improved.

As an example, the OI value of the graphite is 2, 3, 4, 5, etc., or a range formed by any of the foregoing values.

According to some embodiments of the present application, the graphite includes artificial graphite. Thus, compared to natural graphite, the artificial graphite has a smaller number of surface active sites, which improves the service life of the battery cell.

In some embodiments, the negative electrode film layer further optionally includes a binder. The binder is selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent is selected from at least one of superconducting carbon, acetylene black, carbon black, Ketjen black, a carbon dot, a carbon nanotube, graphene, and a carbon nanofiber. Further, optionally, superconductive carbon is used in combination with a carbon nanotube, thereby further improving the conductivity of the negative electrode film layer and the conductivity between the negative electrode film layer and the negative electrode current collector.

In some embodiments, the negative electrode film layer further optionally includes other auxiliary agents, such as a thickener (e.g., sodium carboxymethyl cellulose (CMC-Na)).

In some embodiments, the negative electrode sheet is prepared in the following manner: dispersing the above components for preparing the negative electrode sheet, for example, the negative electrode active material, the conductive agent, the binder, and any other components, in a solvent to form a negative electrode slurry; and coating the negative electrode current collector with the negative electrode slurry, followed by drying, cold pressing, and other processes, to obtain the negative electrode sheet.

### [Electrolyte]

Generally, the electrolyte includes a solvent, a lithium salt, and an additive.

According to some embodiments of the present application, a total mass percentage of the lithium salt in the electrolyte is 8% to 13%, for example, 8%, 9%, 10%, 11%, 12%, or 13%, or a range formed by any of the foregoing values. Thus, the ionic conductivity of the electrolyte is improved. According to some specific embodiments of the present application, a total mass percentage of the lithium salt is 10% to 12%.

According to some embodiments of the present application, the inorganic lithium salt includes lithium hexafluorophosphate. Based on the total mass of the electrolyte, a mass percentage of the inorganic lithium salt is 7.5% to 12%. Thus, the ionic conductivity of the electrolyte is improved. By means of keeping the content of the inorganic lithium salt within the above range, an SEI film having low impedance and moderate hardness is formed on the surface of the negative electrode, which effectively inhibits electrode sheet expansion caused by graphite expansion during cycling, thereby improving the cycle performance of the battery cell.

As an example, the mass percentage of the inorganic lithium salt is 7.5%, 8%, 9%, 10%, 11%, 12%, etc., or a range formed by any of the foregoing values.

According to some embodiments of the present application, the organic lithium salt includes at least one of lithium bis(fluorosulfonyl)imide (LIFSI) and lithium bis(trifluoromethanesulfonyl)imide (LITFSI). Based on the total mass of the electrolyte, a mass percentage of the organic lithium salt is 1% to 4%. Thus, the impedance of the SEI film is reduced, the ionic conductivity of the SEI film is increased, and the kinetic performance of the battery is improved. Meanwhile, the probability of fluorine reacting with aluminum of the positive electrode current collector to form aluminum fluoride due to an excessively high content of the organic lithium salt is reduced, thereby lowering the risk of corrosion to the positive electrode current collector.

As an example, based on the total mass of the electrolyte, a mass percentage of the organic lithium salt is 1%, 2%, 3%, 4%, etc., or a range formed by any of the foregoing values.

According to some embodiments of the present application, the solvent includes a cyclic carbonate and a linear carbonate. Thus, the dielectric constant of the electrolyte is increased, the viscosity of the electrolyte is reduced, and the migration rate of lithium ions is increased.

According to some embodiments of the present application, based on the total mass of the electrolyte, a mass percentage of the cyclic carbonate is 15% to 25%, and a mass percentage of the linear carbonate is 50% to 70%. Thus, the dielectric constant of the electrolyte is increased, the viscosity of the electrolyte is reduced, and the migration rate of lithium ions is increased.

As an example, based on the total mass of the electrolyte, the mass percentage of the cyclic carbonate is 15%, 17%, 19%, 21%, 23%, 25%, etc., or a range formed by any of the foregoing values.

According to some specific embodiments of the present application, based on the total mass of the electrolyte, the mass percentage of the cyclic carbonate is 22% to 25%.

As an example, based on the total mass of the electrolyte, the mass percentage of the linear carbonate is 50%, 55%, 60%, 65%, 70%, etc., or a range formed by any of the foregoing values.

According to some embodiments of the present application, the cyclic carbonate includes at least one of ethylene carbonate (EC) or propylene carbonate.

According to some embodiments of the present application, the linear carbonate includes at least one of dimethyl carbonate, ethyl methyl carbonate, or diethyl carbonate.

According to some embodiments of the present application, the linear carbonate includes dimethyl carbonate (DMC) and ethyl methyl carbonate (EMC). Based on the total mass of the electrolyte, a mass percentage of the dimethyl carbonate is 30% to 40%, and a mass percentage of the ethyl methyl carbonate is 30% to 40%. Thus, the viscosity of the electrolyte is reduced.

As an example, based on the total mass of the electrolyte, the mass percentage of DMC is 30%, 32%, 34%, 36%, 38%, 40%, etc., or a range formed by any of the foregoing values.

As an example, based on the total mass of the electrolyte, the mass percentage of EMC is 30%, 32%, 34%, 36%, 38%, 40%, etc., or a range formed by any of the foregoing values.

According to some embodiments of the present application, the electrolyte further includes a linear carboxylate. Based on the total mass of the electrolyte, a mass percentage of the linear carboxylate is 5% to 15%. Thus, the conductivity of the electrolyte is increased, thereby improving the kinetic performance of the battery cell. In addition, by means of controlling the content of the linear carboxylate to not exceed 15%, the high-temperature stability of the electrolyte is improved.

As an example, the mass percentage of the linear carboxylate is 5%, 7%, 9%, 11%, 13%, 15%, etc., or a range formed by any of the foregoing values.

According to some embodiments of the present application, the linear carboxylate includes at least one of methyl formate, methyl acetate, ethyl formate, and ethyl acetate. Thus, the conductivity of the electrolyte is increased, thereby improving the kinetic performance of the battery cell.

According to some embodiments of the present application, the lithium supplementing agent has a high decomposition voltage. In order to improve the high-voltage resistance performance of the electrolyte, the electrolyte further includes an additive. The additive includes at least one of a fluorine-containing additive or a phosphorus-containing additive. Thus, the above types of additives decompose preferentially over the solvent. A stable CEI film is formed after the decomposition, which reduces the risk of dissolution of the transition metal in the positive material under a high-pressure forming condition, reduces the risk of oxidative decomposition of the electrolyte, and improves the cycle stability of the electrolyte, thereby improving the cycle performance of the battery cell.

According to some embodiments of the present application, the additive includes a fluorine-containing additive and a phosphorus-containing additive, and based on the total mass of the electrolyte, a total mass percentage of the fluorine-containing additive and the phosphorus-containing additive is 0.05% to 1%. Thus, by means of keeping the total mass of the fluorine-containing additive and the phosphorus-containing additive within the above range, the stability of the CEI film is improved, the risk of oxidative decomposition of the electrolyte during the formation stage is reduced, and the cycling stability of the electrolyte is improved, thereby improving the cycle performance of the battery cell.

In the present application, the types and contents of the electrolyte additives are tested with reference to GB/T 9722-2006 "Chemical reagent - General rules for the gas chromatography". Specifically, a certain amount of the electrolyte is tested using a gas chromatograph. The components of the electrolyte are separated based on the differences in adsorption and desorption capabilities of the components of the electrolyte in the chromatographic column, and the separated samples are analyzed using a gas chromatography-mass spectrometer (GC-MS).

As an example, the total mass percentage of the fluorine-containing additive and the phosphorus-containing additive is 0.05%, 0.1%, 0.2%, 0.3%, 0.4%, 0.5%, 0.6%, 0.7%, 0.8%, 0.9%, or 1%, or a range formed by any of the foregoing values.

According to some specific embodiments of the present application, based on the total mass of the electrolyte, a mass percentage of the fluorine-containing additive is 0.05% to 0.5%, and a mass percentage of the phosphorus-containing additive is 0.05% to 0.5%. Thus, the stability of the CEI film is improved, the risk of high-voltage oxidation of the electrolyte during the formation stage is reduced, and the cycle stability of the electrolyte is improved, thereby improving the cycle performance of the battery cell.

As an example, the mass percentage of the fluorine-containing additive is 0.05%, 0.1%, 0.2%, 0.3%, 0.4%, 0.5%, etc., or a range formed by any of the foregoing values.

As an example, the mass percentage of the phosphorus-containing additive is 0.05%, 0.1%, 0.2%, 0.3%, 0.4%, 0.5%, etc., or a range formed by any of the foregoing values.

According to some embodiments of the present application, the fluorine-containing additive includes at least one of fluoroethylene carbonate (FEC), difluoroethylene carbonate (DFEC), and perfluoroalkyl-substituted ethylene carbonate.

According to some embodiments of the present application, the phosphorus-containing additive includes at least one of tris(trimethylsilyl)phosphate(TMSP), triphenylphosphine oxide (TPPO), tris(2,2,2-trifluoroethyl)phosphate (TFEP), trimethylolpropane (TMP), and 2-trifluoroethoxy-2-oxo-1,3,2-dioxaphospholane (TFEOP).

According to some embodiments of the present application, the additive further includes a carbonate-based additive. The carbonate-based additive includes at least one of vinylene carbonate (VC), propylene carbonate, and vinyl ethylene carbonate. Thus, by means of adding the carbonate-based additive to the electrolyte, the SEI film containing the polymer is formed on the surface of the negative electrode, which improves the stability of the SEI film, thereby improving the service life of the battery cell.

According to some embodiments of the present application, the carbonate-based additive includes vinylene carbonate. Based on the total mass of the electrolyte, a mass percentage of the vinylene carbonate is 0.5% to 3%. Thus, by means of adding the carbonate-based additive to the electrolyte, the SEI film containing the polymer is formed on the surface of the negative electrode, which improves the stability of the SEI film, thereby improving the service life of the battery cell.

As an example, based on the total mass of the electrolyte, the mass percentage of the vinylene carbonate is 0.5%, 1%, 1.5%, 2%, 2.5%, 3%, etc., or a range formed by any of the foregoing values. According to some specific embodiments of the present application, the mass percentage of the vinylene carbonate is 1% to 2%.

According to some embodiments of the present application, an electrolyte injection coefficient of the battery cell is 3 g/Ah to 3.8 g/Ah, for example, 3 g/Ah, 3.2 g/Ah, 3.4 g/Ah, 3.6 g/Ah or 3.8 g/Ah, or a range formed by any of the foregoing values. Thus, the kinetic performance and the cycle life of the battery are improved.

### [Separator]

In some embodiments, the battery cell further includes a separator. The present application does not particularly limit the type of the separator, and any porous-structure separator known to have good chemical stability and mechanical stability may be selected.

According to some embodiments of the present application, the separator includes a base film, the base film being provided with a coating on at least one side. The material of the base film includes at least one of polyethylene and polypropylene. Thus, the risk of oxidation of the separator under a high-voltage condition is reduced.

According to some embodiments of the present application, the coating is a ceramic coating.

According to some embodiments of the present application, a thickness of the separator is 7 µm to 15 µm, for example, 7 µm, 9 µm, 11 µm, 13 µm, or 15 µm, or a range formed by any of the foregoing values.

In some embodiments, the positive electrode sheet, the negative electrode sheet, and the separator are manufactured into an electrode assembly by a winding process or a stacking process.

In some embodiments, the battery cell includes an outer packaging. The outer packaging is used for encapsulating the above electrode assembly and electrolyte.

In some embodiments, the outer packaging of the battery cell is a hard shell, for example, a hard plastic shell, an aluminum shell, or a steel shell. The outer packaging of the battery cell is a soft pack, for example, a pouch-type soft pack. The soft pack is made of plastic, and examples of the plastic include polypropylene, polybutylene terephthalate, polybutylene succinate, etc.

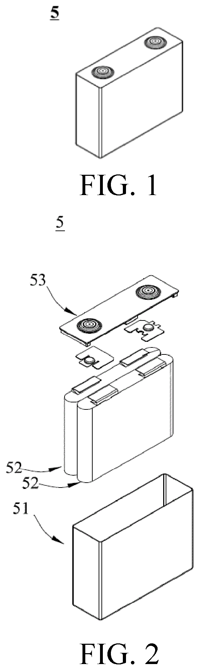

The present application does not particularly limit the shape of the battery cell, and the battery cell is cylindrical, prismatic, or any other shape. For example, FIG. 1 shows a battery cell 5 having a prismatic structure as one example.

In some embodiments, referring to FIG. 2, the outer packaging includes a housing 51 and a cover plate 53. The housing 51 includes a bottom plate and side plates connected to the bottom plate, and the bottom plate and the side plates define, in an enclosing manner, an accommodating cavity. The housing 51 is provided with an opening in communication with the accommodating cavity, and the cover plate 53 lids the opening to close the accommodating cavity. The positive electrode sheet, the negative electrode sheet, and the separator are subjected to a winding process or a stacking process to form an electrode assembly 52. The electrode assembly 52 is encapsulated in the accommodating cavity. The electrolyte infiltrates into the electrode assembly 52. The number of the electrode assemblies 52 included in the battery cell 5 is one or more, and the specific number is selected by a person skilled in the art according to actual requirements.

A second aspect of the present application provides a battery apparatus, including the battery cell according to the first aspect of the present application. The battery apparatus is at least one of a battery module, a battery pack, and an energy storage apparatus.

In some embodiments, the battery cell is assembled into a battery module. The number of battery cells included in the battery module is one or more, and the specific number is selected by a person skilled in the art according to the application and capacity of the battery module.

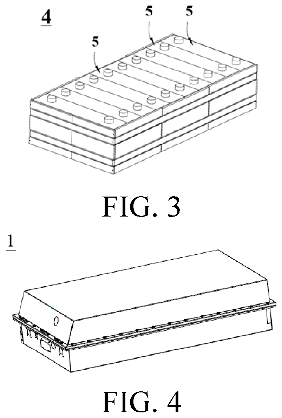

FIG. 3 shows a battery module 4 as one example. Referring to FIG. 3, in the battery module 4, a plurality of battery cells 5 are sequentially arranged in the length direction of the battery module 4. Certainly, the plurality of battery cells is alternatively arranged in any other manner. Further, the plurality of battery cells 5 is fixed by means of fasteners.

Optionally, the battery module 4 further includes a shell having an accommodating space, in which the plurality of battery cells 5 are accommodated.

In some embodiments, the battery module is further assembled into a battery pack. The number of battery modules included in the battery pack is one or more, and the specific number is selected by a person skilled in the art according to the application and capacity of the battery pack.

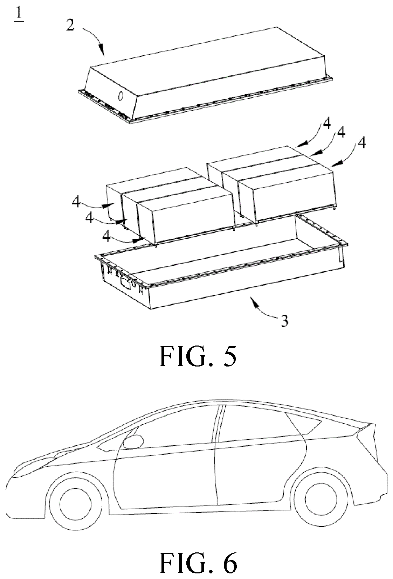

FIG. 4 and FIG. 5 show a battery pack 1 as one example. Referring to FIG. 4 and FIG. 5, the battery pack 1 includes a battery case and a plurality of battery modules 4 arranged in the battery case. The battery case includes an upper case body 2 and a lower case body 3. The upper case body 2 lids the lower case body 3 to form a closed space for accommodating the battery modules 4. The plurality of battery modules 4 are arranged in any manner in the battery case.

In addition, the present application further provides an electric device. The electric device includes at least one of the battery cell, the battery module, or the battery pack according to the present application. The battery cell, the battery module, or the battery pack is used as a power source for the electric device, and is alternatively used as an energy storage unit of the electric device. The electric device includes, but is not limited to, a mobile device (for example, a mobile phone or a laptop computer), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

As the electric device, a battery cell, a battery module, or a battery packet is selected according to the use requirement of the electric device.

FIG. 6 shows an electric device as one example. The electric device is an all-electric vehicle, a hybrid electric vehicle, a plug-in hybrid electric vehicle, etc. To meet the requirements of the electric device for high power and high energy density of the battery, a battery pack or a battery module is used.

As another example, the device is a mobile phone, a tablet computer, a laptop computer, etc. The device is generally required to be light and thin, and a battery cell is thus used as a power source.

To make the technical problems to be solved, technical solutions, and beneficial effects of the embodiments of the present application clearer, the present application is further described in detail below with reference to the embodiments and the accompanying drawings. Apparently, the described examples are merely some, rather than all, of the examples of the present application. The following description of at least one exemplary embodiment is actually merely illustrative, and is in no way intended to limit the present application and the application thereof. All other embodiments obtained by a person of ordinary skill in the art based on the embodiments of the present application without creative efforts shall fall within the scope of protection of the present application.

### Example 1

### 1. Positive electrode sheet

The positive electrode sheet included an aluminum foil as a positive electrode current collector. The aluminum foil was provided with positive electrode film layers on both surfaces. The compaction density was 2.39 g/cm³, and the coating weight of the positive electrode film layer on a single side was 18.5 mg/cm². Based on the total mass of the positive electrode film layer on a single side, the positive electrode film layer included, by mass percentage, 94.5% of a lithium iron phosphate material, 2.5% of Li₂NiO₂ as a lithium supplementing agent, 0.8% of carbon black as a conductive agent, and 2.2% of polyvinylidene fluoride (PVDF) as a binder. A first carbon coating layer was formed on the surface of the lithium iron phosphate. Based on the total mass of the lithium iron phosphate, the mass percentage of the first carbon coating layer was 1.5%.

### 2. Negative electrode sheet

The negative electrode sheet included a copper foil as a negative electrode current collector. The copper foil was provided with negative electrode film layers on both surfaces. The compaction density was 1.32 g/cm³, and the coating weight of the negative electrode film layer on a single side was 8.6 mg/cm². Based on the total mass of the negative electrode film layer on a single side, the negative electrode film layer included, by mass percentage, 96.6% of artificial graphite (with an OI value of 3.63), 0.4% of carbon black as a conductive agent, 1.8% of styrene-butadiene rubber (SBR) as a binder, and 1.2% of sodium carboxymethyl cellulose (CMC-Na) as a thickener.

### 3. Electrolyte

The electrolyte included a solvent, an electrolyte salt, and an additive. The solvent included EC, DMC and EMC, where the mass percentage of EC:DMC:EMC was 24:38:38. The additive included TMSP, FEC, and VC, where, based on the total mass of the electrolyte, the mass percentage of TMSP was 0.23%, the mass percentage of FEC was 0.12%, and the mass percentage of VC was 1.39%. The electrolyte salt included LiPF₆ and LIFSI, where, based on the total mass of the electrolyte, the mass percentage of LiPF₆ was 9.383%, and the mass percentage of LIFSI was 2.57%.

### 4. Separator

Polypropylene film with a thickness of 12 µm.

### 5. Battery cell

The battery cell included a positive electrode sheet, a separator, a negative electrode sheet, and an electrolyte.

### Performance test

### 1. DCR test

At 25 °C, the battery cell was charged to 3.65 V at a constant current of 1/3 C, and then charged at a constant voltage of 3.65 V until the current reached 0.05 C. After being left to stand for 5 min, the battery cell was discharged at a constant current of 1/3 C for 90 min. After being left to stand for 120 min, the voltage V₁ was recorded. Then, the battery cell was discharged at 4 C for 30 s, and the voltage V₂ was recorded. The internal resistance DCR of the battery cell was obtained by calculating (V₂ - V₁)/4 C.

### 2. Capacity retention rate after 1000 cycles

At 25 °C, the corresponding battery cell was charged to 3.65 V at a constant current of 1/3 C, and then charged at a constant voltage of 3.65 V until the current reached 0.05 C. After being left to stand for 5 min, the battery cell was discharged to 2.5 V at a rate of 1/3 C. The obtained capacity was recorded as the initial capacity C₀. The above steps were repeated for the same battery cell, and the discharge capacity Cₙ of the battery cell after the nth cycle was recorded. The capacity retention rate of the battery cell after each cycle was calculated as Pₙ = Cₙ/C₀ × 100%. In the test process, the first cycle corresponded to n = 1, the second cycle corresponded to n = 2, ..., and the 1000th cycle corresponded to n = 1000.

### 3. Capacity retention rate after 150-day storage at 60 °C

At 25 °C, the corresponding battery cell was charged to 3.65 V at a constant current of 1/3 C, and then charged at a constant voltage of 3.65 V until the current reached 0.05 C. After being left to stand for 5 min, the battery cell was discharged to 2.5 V at a rate of 1/3 C. The obtained capacity was recorded as the initial capacity C₀. The battery cell was charged to 3.65 V at a constant current of 1/3 C, and then charged at a constant voltage until the current reached 0.05 C. Then, the battery cell was placed in a constant-temperature oven at 60 °C for 150 days, and then taken out and discharged to 2.5 V at a constant current of 1/3 C at room temperature. After being taken out, the battery cell was charged to 3.65 V at a constant current of 1/3 C at 25 °C, and then charged at a constant voltage of 3.65 V until the current reached 0.05 C. After being left to stand for 5 min, the battery cell was discharged to 2.5 V at a constant current of 1/3 C. The capacity Cₙ was recorded. The capacity retention rate was calculated as (Cₙ/C₀) × 100%.

### Example 2, Example 3, Comparative Example 2 and Comparative Example 3

The positive electrode sheet, negative electrode sheet, electrolyte solvents and additive in the battery cells were the same as those in Example 1, with the difference that the mass percentages of LiPF₆ and LIFSI were different, and the mass ratio of the inorganic lithium salt to the organic lithium salt was different.

### Example 4

The positive electrode sheet, negative electrode sheet, electrolyte solvent, and additive in the battery cell were the same as those in Example 1, with the difference that the organic lithium salt was LITFSI.

### Comparative Example 1

The negative electrode sheet and electrolyte in the battery cell were the same as those in Example 1, with the difference that the positive electrode film layer did not contain a lithium supplementing agent.

The differences among Example 1 to Example 4 and Comparative Example 1 to Comparative Example 3 are shown in Table 1:

**Table 1**

| | **Mass percentage of TMSP (%)** | **Mass percentage of FEC (%)** | **Mass percentage of LiPF₆ (%)** | **Type of organic lithium salt** | **Mass percentage of organic lithium salt based on the total mass of electrolyte (%)** | **Mass ratio of inorganic lithium salt to organic lithium salt** | **DCR mohm** | **Capacity retention after 1000 cls (%)** | **Capacity retention rate after 150D of storage at 60 °C (%)** |
|---|---|---|---|---|---|---|---|---|---|
| **Comparative Example 1** | 0 | 0 | 11.95 | \ | 0 | \ | 118 | 76.4 | 71.5 |
| **Comparative Example 2** | 0.23 | 0.12 | 7.17 | LIFSI | 4.78 | 1.5 | 515 | 91.6 | 88.4 |
| **Comparative Example 3** | 0.23 | 0.12 | 10.46 | LIFSI | 1.49 | 7 | 71 | 91.5 | 88.7 |
| **Example 1** | 0.23 | 0.12 | 9.383 | LIFSI | 2.57 | 3.65 | 46 | 92.7 | 90.1 |
| **Example 2** | 0.23 | 0.12 | 7.97 | LIFSI | 3.98 | 2 | 51 | 92.5 | 89.9 |
| **Example 3** | 0.23 | 0.12 | 10.25 | LIFSI | 1.71 | 6 | 64 | 91.9 | 89.1 |
| **Example 4** | 0.23 | 0.12 | 9.383 | LITFSI | 2.57 | 3.65 | 46 | 92.7 | 90.1 |

As can be seen from comparisons between Example 1 to Example 3 and Comparative Example 1 to Comparative Example 3, the battery cell according to the present application has a lower internal resistance, and has a higher cycle capacity retention rate and high-temperature capacity retention rate. This indicates that in the present application, by means of adding a lithium supplementing agent to the positive electrode film layer, the high-temperature cycle performance of the battery cell can be improved. By means of controlling the relative contents of the organic lithium salt and inorganic lithium salt to be within a reasonable value range in the electrolyte, the side reactions between transition metal oxides generated by the lithium supplementing agent and the electrolyte can be reduced, thereby improving the cycle performance of the battery. In addition, the SEI formed by the combination of the organic lithium salt and the inorganic lithium salt has low impedance, which increases the intercalation and deintercalation rates of lithium ions in graphite, thereby improving the power performance of the battery cell.

As can be seen from Example 4 and Example 1, different types of organic lithium salts have an effect of improving the cycle performance and the power performance of the battery cell.

### Example 5 and Example 6

The positive electrode sheet, negative electrode sheet, electrolyte solvent, and additive in the battery cells were the same as those in Example 1, with the difference that the content of TMSP was different.

### Example 7 and Example 8

The positive electrode sheet, negative electrode sheet, electrolyte solvent, and additive in the battery cells were the same as those in Example 1, with the difference that the content of FEC was different.

The differences among Example 5 to Example 8 are shown in Table 2.

**Table 2**

| | **Mass percentage of TMSP (%)** | **Mass percentage of FEC (%)** | **DCR mohm** | **Capacity retention after 1000 cls (%)** | **Capacity retention rate after 150D of storage at 60 °C (%)** |
|---|---|---|---|---|---|
| **Example 1** | 0.23 | 0.12 | 46 | 92.7 | 90.1 |
| **Example 5** | 0.05 | 0.12 | 59 | 87.6 | 84.4 |
| **Example 6** | 0.5 | 0.12 | 44 | 92.7 | 90.3 |
| **Example 7** | 0.23 | 0.05 | 46 | 84.1 | 80.6 |
| **Example 8** | 0.23 | 0.5 | 64 | 92.8 | 90 |

As can be seen from Example 1 and Example 5 to Example 8, by means of controlling the contents of the phosphorus-containing additive and the fluorine-containing additive in the electrolyte, the internal resistance, cycle capacity retention rate, and high-temperature capacity retention rate of the battery cell are adjusted, thereby obtaining a battery cell having both long service life and low internal resistance.

### Example 9 and Example 10

The positive electrode sheet, negative electrode sheet, electrolyte salt, and additive in the battery cells were the same as those in Example 1, with the difference that the electrolyte solvent further included methyl acetate (MA), and the content of MA was different, as shown in Table 3.

**Table 3**

| | **Solvent mass ratio** | **DCR mohm** | **Capacity retention after 1000 cls (%)** | **Capacity retention rate after 150D of storage at 60 °C (%)** |
|---|---|---|---|---|
| **Example 1** | EC:DMC:EMC = 24:38:38 | 46 | 92.7 | 90.1 |
| **Example 9** | EC:DMC:EMC:MA = 24:33:38:5 | 39 | 91.6 | 89.2 |
| **Example 10** | EC:DMC:EMC:MA = 24:23:38:15 | 31 | 90.5 | 88.1 |

As can be seen from Example 1, Example 9 and Example 10, by means of adding different contents of MA to the electrolyte, the internal resistance of the battery cell is further reduced, thereby improving the kinetic performance of the battery cell.

### Example 11

The negative electrode sheet and electrolyte in the battery cell were the same as those in Example 1, with the difference that the type of lithium supplementing agent was different.

### Example 12 and Example 13

The negative electrode sheet and electrolyte in the battery cells were the same as those in Example 1, with the difference that the compaction density of the positive electrode film layer was different.

The type of lithium supplementing agent in Example 11 and the compaction densities of the positive electrode film layers in Example 12 and Example 13 are shown in Table 4.

**Table 4**

| | **Type of lithium supplementing agent** | **Compaction density (g/cm³)** | **DCR mohm** | **Capacity retention after 1000 cls (%)** | **Capacity retention rate after 150D of storage at 60 °C (%)** |
|---|---|---|---|---|---|
| **Example 1** | Li₂NiO₂ | 2.39 | 46 | 92.7 | 90.1 |
| **Example 11** | Li₅FeO₄ | 2.39 | 65 | 93 | 87.6 |
| **Example 12** | Li₂NiO₂ | 2.2 | 73 | 92.1 | 89.5 |
| **Example 13** | Li₂NiO₂ | 2.6 | 56 | 92.2 | 89.9 |

As can be seen from Example 1 and Example 11, different types of lithium supplementing agents all have an effect of improving the battery cycle performance.

As can be seen from Example 1, Example 12 and Example 13, the positive electrode film layers formed with different compaction densities all provide battery cells having both long service life and low internal resistance.

### Example 14 and Example 15

The positive electrode sheet and electrolyte in the battery cell were the same as those in Example 1, with the difference that the OI value of the negative electrode graphite was different.

### Example 16 and Example 17

The positive electrode sheet and electrolyte in the battery cell were the same as those in Example 1, with the difference that the volume average particle size of the negative electrode graphite was different.

### Example 18 and Example 19

The positive electrode sheet and electrolyte in the battery cell were the same as those in Example 1, with the difference that the compaction density of the negative electrode film layer was different.

The differences in the negative electrode sheets of Example 14 to Example 19 are shown in Table 5.

**Table 5**

| | **OI value of graphite** | **Volume average particle size Dv50 of graphite (µm)** | **Compaction density (g/cm³)** | **DCR mohm** | **Capacity retention after 1000 cls (%)** | **Capacity retention rate after 150D of storage at 60 °C (%)** |
|---|---|---|---|---|---|---|
| **Example 1** | 3.63 | 11.4 | 1.32 | 46 | 92.7 | 90.1 |
| **Example 14** | 2 | 11.4 | 1.32 | 38 | 91.5 | 88.4 |
| **Example 15** | 5 | 11.4 | 1.32 | 82 | 92.8 | 90.1 |
| **Example 16** | 3.63 | 8 | 1.32 | 35 | 91.9 | 89.6 |
| **Example 17** | 3.63 | 14 | 1.32 | 76 | 92.7 | 90.2 |
| **Example 18** | 3.63 | 11.4 | 1.2 | 63 | 92.4 | 89.2 |
| **Example 19** | 3.63 | 11.4 | 1.7 | 58 | 90.8 | 88.7 |

As can be seen from Example 1, Example 14 and Example 15, by means of reducing the OI value of graphite, the internal resistance of the battery cell is lowered, allowing the battery cell to have excellent cycle performance.

As can be seen from Example 1, Example 16 and Example 17, by means of reducing the volume average particle size of graphite, the internal resistance of the battery cell is lowered, allowing the battery cell to have excellent cycle performance.

As can be seen from Example 1, Example 18 and Example 19, the negative electrode film layers formed with different compaction densities all provide battery cells having both long service life and low internal resistance.

Finally, it should be noted that the foregoing examples are only used to illustrate the technical solutions of the present application, rather than limit the same. Although the present application has been described in detail with reference to the foregoing examples, a person of ordinary skill in the art should understand that they may still make modifications to the technical solutions described in the foregoing examples, or make equivalent replacements to some or all technical features thereof. However, such modifications or replacements do not cause the essence of the corresponding technical solutions to depart from the scope of the technical solutions in the examples of the present application, and shall all fall within the scope of the claims and description of the present application. In particular, as long as there is no structural conflict, the technical features mentioned in the examples may be combined in any manner. The present application is not limited to the specific examples disclosed herein, but encompasses all technical solutions falling within the scope of the claims.

## Claims

1. A battery cell, comprising:
a positive electrode sheet comprising a positive electrode film layer, the positive electrode film layer comprising a lithium iron phosphate material and a lithium supplementing agent;
a negative electrode sheet comprising a negative electrode film layer, the negative electrode film layer comprising a negative electrode active material, and the negative electrode active material comprising graphite;
a separator located between the positive electrode sheet and the negative electrode sheet; and
an electrolyte comprising a lithium salt, the lithium salt comprising an organic lithium salt and an inorganic lithium salt, the organic lithium salt comprising at least one of lithium bis(fluorosulfonyl)imide, lithium difluoro(oxalato)borate, and lithium difluoro(oxalato)phosphate, the inorganic lithium salt comprising at least one of lithium hexafluorophosphate, lithium tetrafluoroborate, and lithium fluorosulfonate, and a mass ratio of the inorganic lithium salt to the organic lithium salt being (6-2):1.

2. The battery cell according to claim 1, wherein the organic lithium salt comprises at least one of lithium bis(fluorosulfonyl)imide and lithium bis(trifluoromethanesulfonyl)imide, and based on the total mass of the electrolyte, a mass percentage of the organic lithium salt is 1% to 4%.

3. The battery cell according to claim 1 or 2, wherein the inorganic lithium salt comprises lithium hexafluorophosphate, and based on the total mass of the electrolyte, a mass percentage of the inorganic lithium salt is 7.5% to 12%.

4. The battery cell according to any one of claims 1 to 3, wherein an OI value of the graphite is 2 to 5.

5. The battery cell according to any one of claims 1 to 4, wherein a volume average particle size Dv50 of the graphite is 8 µm to 14 µm.

6. The battery cell according to any one of claims 1 to 5, wherein the graphite comprises artificial graphite.

7. The battery cell according to any one of claims 1 to 6, wherein the lithium supplementing agent comprises LiₓM_{y}O_{z}, wherein M comprises at least one of Ni, Co, V, Cr, Mn, Fe, Mo, Cu, and Zn, 0 < x ≤ 5, 1 ≤ y ≤ 3, and 2 ≤ z ≤ 8.

8. The battery cell according to any one of claims 1 to 6, wherein the lithium supplementing agent comprises at least one of Li₂NiO₂ and Li₅FeO₄.

9. The battery cell according to any one of claims 1 to 6, wherein the lithium supplementing agent comprises at least one of LiₙNiOₘ and LiₑFeO_{f}, wherein 0 < m ≤ 2, 0 ≤ n ≤2,0≤e≤5,and0<f≤4.

10. The battery cell according to any one of claims 1 to 6, wherein the lithium supplementing agent comprises at least one of NiOₘ and LiₚFeO_{q}, wherein 0 < m ≤ 2, 0 ≤ p ≤ 1, and 0 < q ≤ 2.

11. The battery cell according to any one of claims 1 to 10, wherein the electrolyte further comprises a solvent, the solvent comprising a cyclic carbonate and a linear carbonate.

12. The battery cell according to claim 11, wherein based on the total mass of the electrolyte, a mass percentage of the cyclic carbonate is 15% to 25%, and a mass percentage of the linear carbonate is 50% to 70%.

13. The battery cell according to claim 11 or 12, wherein the cyclic carbonate comprises at least one of ethylene carbonate or propylene carbonate; and/or
the linear carbonate comprises at least one of dimethyl carbonate, ethyl methyl carbonate, or diethyl carbonate.

14. The battery cell according to any one of claims 11 to 13, wherein the linear carbonate comprises dimethyl carbonate and ethyl methyl carbonate, and based on the total mass of the electrolyte, a mass percentage of the dimethyl carbonate is 30% to 40%, and a mass percentage of the ethyl methyl carbonate is 30% to 40%.

15. The battery cell according to any one of claims 11 to 14, wherein the electrolyte further comprises a linear carboxylate, and based on the total mass of the electrolyte, a mass percentage of the linear carboxylate is 5% to 15%.

16. The battery cell according to claim 15, wherein the linear carboxylate comprises at least one of methyl formate, methyl acetate, ethyl formate, and ethyl acetate.

17. The battery cell according to any one of claims 1 to 16, wherein the electrolyte further comprises an additive, the additive comprising at least one of a fluorine-containing additive or a phosphorus-containing additive.

18. The battery cell according to claim 17, wherein the additive comprises a fluorine-containing additive and a phosphorus-containing additive, and based on the total mass of the electrolyte, a total mass percentage of the fluorine-containing additive and the phosphorus-containing additive is 0.05% to 1%.

19. The battery cell according to claim 17 or 18, wherein based on the total mass of the electrolyte, a mass percentage of the fluorine-containing additive is 0.05% to 0.5%, and a mass percentage of the phosphorus-containing additive is 0.05% to 0.5%.

20. The battery cell according to any one of claims 17 to 19, wherein the fluorine-containing additive comprises at least one of fluoroethylene carbonate, difluoroethylene carbonate, and perfluoroalkyl-substituted ethylene carbonate; and/or
the phosphorus-containing additive comprises at least one of tris(trimethylsilyl) phosphate, triphenylphosphine oxide, tris(2,2,2-trifluoroethyl) phosphite, trimethylolpropane, tris(2,2,2-trifluoroethyl) phosphate, and 2-trifluoroethoxy-2-oxo-1,3,2-dioxaphospholane.

21. The battery cell according to any one of claims 17 to 20, wherein the additive further comprises a carbonate-based additive, the carbonate-based additive comprising at least one of vinylene carbonate, propylene carbonate, and vinyl ethylene carbonate.

22. The battery cell according to claim 21, wherein the carbonate-based additive comprises vinylene carbonate, and based on the total mass of the electrolyte, a mass percentage of the vinylene carbonate is 0.5% to 3%.

23. The battery cell according to any one of claims 1 to 22, wherein at least a part of the surface of the lithium iron phosphate is provided with a first carbon coating layer, and based on the total mass of the lithium iron phosphate, a mass percentage of the first carbon coating layer is 0.5% to 1.5%; and/or
at least a part of the surface of the lithium supplementing agent is provided with a second carbon coating layer, and based on the total mass of the lithium supplementing agent, a mass percentage of the second carbon coating layer is 1% to 5%.

24. The battery cell according to any one of claims 1 to 23, wherein based on the total mass of the positive electrode film layer, a mass percentage of the lithium supplementing agent is 0.5% to 5%.

25. The battery cell according to any one of claims 1 to 24, wherein a coating weight of the positive electrode film layer is 10 mg/cm² to 25 mg/cm².

26. The battery cell according to any one of claims 1 to 25, wherein a compaction density of the positive electrode film layer is 2.2 g/cm³ to 2.6 g/cm³.

27. The battery cell according to any one of claims 1 to 26, wherein a coating weight of the negative electrode film layer is 5 mg/cm² to 15 mg/cm².

28. The battery cell according to any one of claims 1 to 27, wherein a compaction density of the negative electrode film layer is 1.2 g/cm³ to 1.7 g/cm³.

29. The battery cell according to any one of claims 1 to 28, wherein the separator comprises a base film, the base film being provided with a coating on at least one side.

30. The battery cell according to any one of claims 1 to 29, wherein a thickness of the separator is 7 µm to 15 µm.

31. The battery cell according to any one of claims 1 to 30, wherein an electrolyte injection coefficient of the battery cell is 3 g/Ah to 3.8 g/Ah.

32. A battery apparatus, comprising the battery cell according to any one of claims 1 to 31, wherein the battery apparatus is at least one of a battery module, a battery pack, and an energy storage apparatus.

33. An electric device, comprising the battery cell according to any one of claims 1 to 31 or the battery apparatus according to claim 32, wherein the battery cell or the battery apparatus is configured to provide electric energy.
